**Europäisches Patentamt**

**European Patent Office**

**Office européen des brevets**

(19)

(11) Veröffentlichungsnummer: **0 273 281 B1**

(12) **EUROPÄISCHE PATENTSCHRIFT**

(45) Veröffentlichungstag der Patentschrift: **04.09.91**

(21) Anmeldenummer: **87118452.9**

(22) Anmeldetag: **12.12.87**

(51) Int. Cl.⁵: **C22C 37/08, B32B 15/01**

(54) Arbeitswalze aus Verbundguss für ein Walzwerk.

(30) Priorität: **18.12.86 DE 3643259**

(43) Veröffentlichungstag der Anmeldung:
**06.07.88 Patentblatt 88/27**

(45) Bekanntmachung des Hinweises auf die
Patenterteilung:
**04.09.91 Patentblatt 91/36**

(84) Benannte Vertragsstaaten:
**AT FR GB IT SE**

(56) Entgegenhaltungen:
**US-A- 2 662 011**

**PATENT ABSTRACTS OF JAPAN, Band 10,
Nr. 21 (M-449)[2078], 28. Januar 1986; & JP-
A-60 180 609 (HITACHI KINZOKU K.K.)
14-09-1985**

**THE PRODUCTION OF NI-HARD MARTENSI-
TIC WHITE CAST IRON, August 1963, Seiten
4,5, The International Nickel Co. (Mond) Ltd,
London, GB**

(73) Patentinhaber: **Gontermann-Peipers GmbH
Hauptstrasse 20
W-5900 Siegen 1(DE)**

(72) Erfinder: **Schröder, Karl, Heinrich, Dr.-Ing.
Von-Galen-Strasse 4
W-5900 Siegen 1(DE)**

(74) Vertreter: **Spalthoff, Adolf, Dipl.-Ing.
Pelmanstrasse 31 Postfach 34 02 20
W-4300 Essen 1(DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die Erfindung betrifft eine Arbeitswalze aus Verbundguß für ein Walzwerk, deren Kern aus einer Eisenlegierung besteht und deren Hülle eine Eisenlegierung mit folgenden Bestandteilen in Gew.% aufweist:

$$C = 2 - 3,5$$

$$Cr = 10 - 25$$

$$Mo \text{ kleiner als } 5$$

$$Ni \text{ kleiner als } 2$$

$$Mn \text{ kleiner als } 2$$

$$Si \text{ kleiner als } 1.$$

Derartige Arbeitswalzen, auch als Hoch-Chrom-Walzen bezeichnet, finden in Warmstraßen und Grobblechgerüsten Verwendung. Die bekannten Walzen sind im Verbund gegossen mit einem Kern aus Grauguß oder Gußeisen mit Kugelgraphit und sind wärmebehandelt, und zwar mit Anlaß- oder Reaustenitisierungswärmebehandlung.

Diese bekannten Arbeitswalzen haben sich an sich bewährt, jedoch lassen sich diese trotz einer vergleichsweise hohen Verschleißfestigkeit nicht universal einsetzen, beispielsweise nicht in den ersten Gerüsten einer Fertigstaffel für besondere Blechqualitäten sowie in den letzten Gerüsten von Warmbandstraßen, da sich gezeigt hat, daß die Bandoberflächen nicht in der gewünschten Qualität zu erzeugen waren. Als Hauptfehler erwiesen sich hierbei Eindrücke auf der Oberfläche und "Kleben" von Walzgut auf dem Walzballen.

Um diese Nachteile zu beseitigen wird erfindungsgemäß vorgeschlagen, daß der Anteil der Eisenlegierung der Hülle an Ni auf 4 - 6 Gew.% erhöht ist. Ansonsten bleibt die übliche Zusammensetzung von Hoch-Chrom-Walzen erhalten. Über die erfindungsgemäße Beeinflussung der Metallgefüge-matrix werden die nachteiligen Eigenschaften der bekannten Arbeitswalzen bei unveränderter Karbidstruktur beseitigt. Es sind Oberflächenhärten zwischen 60 und 100 ShC erreichbar.

Die Arbeitswalze kann folgende Zusammensetzungen in Gew.% aufweisen:

| Beispiel 1 | | |
|---|---|---|
| Bestandteile | Hülle | Kern |
| C | 2,73 | 3,51 |
| Si | 0.98 | 1,74 |
| Mn | 0,50 | 0,24 |
| P | 0,015 | 0,016 |
| S | 0,025 | 0,05 |
| Cr | 17,32 | |
| Mo | 0,56 | |
| Ni | 4,52 | |
| Mg | | 0,057 |

EP 0 273 281 B1

| Beispiel 2 | | |
|---|---|---|
| Bestandteile | Hülle | Kern |
| C | 2,78 | 2,95 |
| Si | 0,99 | 2,53 |
| Mn | 0,61 | 0,39 |
| P | 0,025 | 0,050 |
| S | 0,025 | 0,013 |
| Cr | 17,02 | |
| Mo | 1,2 | |
| Ni | 4,44 | |

Die erfindungsgemäße Arbeitswalze eignet sich besonders zum Einsatz in Großblechgerüsten, in Warmbandstraßen in allen Gerüsten und besonders in den letzten Gerüsten sowie in Steckelgerüsten.

**Patentansprüche**

1. Arbeitswalze aus Verbundguß für ein Walzwerk, deren Kern aus einer Eisenlegierung besteht und deren Hülle eine Eisenlegierung mit folgenden Bestandteilen in Gew.% aufweist:

```
C    =              2 - 3,5

Cr   =              10 - 25

Mo   kleiner als    5

Ni   kleiner als    2

Mn   kleiner als    2

Si   kleiner als    1,
```

dadurch gekennzeichnet, daß der Anteil der Eisenlegierung der Hülle an Ni auf 4 - 6 Gew.% erhöht ist.

2. Arbeitswalze nach Anspruch 1, dadurch gekennzeichnet, daß die Eisenlegierung der Hülle folgende Bestandteile in Gew.% aufweist:

| | |
|---|---|
| C | 2,73 |
| Si | 0,98 |
| Mn | 0,59 |
| P | 0,015 |
| S | 0,025 |
| Cr | 17,32 |
| Mo | 0,56 |
| Ni | 4,52 |

3. Arbeitswalze nach Anspruch 1, dadurch gekennzeichnet, daß die Eisenlegierung der Hülle folgende Bestandteile in Gew.% aufweist:

3

| C | 2,78 |
|---|---|
| Si | 0,99 |
| Mn | 0,61 |
| P | 0,025 |
| S | 0,025 |
| Cr | 17,02 |
| Mo | 1,2 |
| Ni | 4,44 |

4. Arbeitswalze nach Anspruch 1 oder einem der vorhergehenden, dadurch gekennzeichnet, daß die Eisenlegierung des Kerns folgende Bestandteile in Gew.% aufweist:

| C | 3,51 |
|---|---|
| Si | 1,74 |
| Mn | 0,24 |
| P | 0,016 |
| S | 0,05 |
| Mg | 0,057 |

5. Arbeitswalze nach Anspruch 1 oder einem der vorhergehenden, dadurch gekennzeichnet, daß die Eisenlegierung des Kerns folgende Bestandteile in Gew.% aufweist:

| C | 2,95 |
|---|---|
| Si | 2,53 |
| Mn | 0,39 |
| P | 0,050 |
| S | 0,013 |

## Claims

1. Composite casting working roller for a rolling mill, the core of which consists of an iron alloy and the sheath of which comprises an iron alloy with the following components, given as weight percentages:

$$C \quad = \quad 2 - 3.5$$

$$Cr \quad = \quad 10 - 25$$

$$Mo \ less \ than \quad 5$$

$$Ni \ less \ than \quad 2$$

$$Mn \ less \ than \quad 2$$

$$Si \ less \ than \quad 1$$

characterised in that the amount of Ni in the iron alloy of the sheath is increased to 4 - 6 weight percent.

2. Working roller according to claim 1, characterised in that the iron alloy of the sheath has the following components, given as weight percentages:

| C | 2.73 |
|----|-------|
| Si | 0.98 |
| Mn | 0.59 |
| P | 0.015 |
| S | 0.025 |
| Cr | 17.32 |
| Mo | 0.56 |
| Ni | 4.52 |

3. Working roller according to claim 1, characterised in that the iron alloy of the sheath comprises the following components, given as weight percentages:

| C | 2.78 |
|----|-------|
| Si | 0.99 |
| Mn | 0.61 |
| P | 0.025 |
| S | 0.025 |
| Cr | 17.02 |
| Mo | 1.2 |
| Ni | 4.44 |

4. Working roller according to claim 1 or to one of the preceding claims, characterised in that the iron alloy of the core has the following components, given as weight percentages:

| C | 3.51 |
|----|-------|
| Si | 1.74 |
| Mn | 0.24 |
| P | 0.016 |
| S | 0.05 |
| Mg | 0.057 |

5. Working roller according to claim 1 or to one of the preceding claims, characterised in that the iron alloy of the core has the following components, given as weight percentages:

| C | 2.95 |
|----|-------|
| Si | 2.53 |
| Mn | 0.39 |
| P | 0.050 |
| S | 0.013 |

**Revendications**

1. Cylindre de travail en fonte composite pour un laminoir, dont le noyau est constitué par un alliage de fer et dont l'enveloppe est formée par un alliage de fer ayant les constituants suivants, en % en poids :

```
C    :        2 -  3,5
Cr   :        10 - 25
Mo   :        inférieur à 5
Ni   :        inférieur à 2
Mn   :        inférieur à 2
Si   :        inférieur à 1,
```

caractérisé en ce que la teneur en Ni de l'alliage de fer de l'enveloppe est élevée à 4 - 6 % en poids.

2. Cylindre de travail selon la revendication 1, caractérisé en ce que l'alliage de fer de l'enveloppe présente les constituants suivants, en % en poids :

| | |
|---|---|
| C | 2,73 |
| Si | 0,98 |
| Mn | 0,59 |
| P | 0,015 |
| S | 0,025 |
| Cr | 17,32 |
| Mo | 0,56 |
| Ni | 4,52 |

3. Cylindre de travail selon la revendication 1, caractérisé en ce que l'alliage de fer de l'enveloppe présente les constituants suivants, en % en poids :

| | |
|---|---|
| C | 2,78 |
| Si | 0,99 |
| Mn | 0,61 |
| P | 0,025 |
| S | 0,025 |
| Cr | 17,02 |
| Mo | 1,2 |
| Ni | 4,44 |

4. Cylindre de travail selon la revendication 1 ou l'une des revendications précédentes, caractérisé en ce que l'alliage de fer du noyau présente les constituants suivants, en % en poids :

| | |
|---|---|
| C | 3,51 |
| Si | 1,74 |
| Mn | 0,24 |
| P | 0,016 |
| S | 0,05 |
| Mg | 0,057 |

5. Cylindre de travail selon la revendication 1 ou l'une des revendications précédentes, caractérisé en ce que l'alliage de fer du noyau présente les constituants suivants, en % en poids :

| C | 2,95 |
|---|---|
| Si | 2,53 |
| Mn | 0,39 |
| P | 0,050 |
| S | 0,013 |